# EUROPEAN PATENT SPECIFICATION

(11) **EP 3 783 422 B1**
(45) Date of publication and mention of the grant of the patent: **28.02.2024**
(21) Application number: 19192063.6
(22) Date of filing: 16.08.2019
(51) Int. Cl.: G02F 1/03

(54) **AN OPTICAL SYSTEM COMPRISING A SYMMETRIC COOLING ARRANGEMENT FOR COOLING AN OPTICAL DEVICE**
OPTISCHES SYSTEM MIT SYMMETRISCHER KÜHLANORDNUNG ZUR KÜHLUNG EINER OPTISCHEN VORRICHTUNG
SYSTÈME OPTIQUE COMPRENANT UN AGENCEMENT DE REFROIDISSEMENT SYMÉTRIQUE D'UN DISPOSITIF OPTIQUE

(43) Date of publication of application: 24.02.2021
(73) Proprietor: BME MESSGERÄTE ENTWICKLUNG KG, 82418 Murnau (DE); Catella, Gary, Chagrin Falls, OH 44023 (US)
(72) Inventor: CATELLA, Gary, Chagrin Falls, OH 44023 (US)
(74) Representative: Lambsdorff & Lange Patentanwälte Partnerschaft mbB

(56) References cited:
- CN-A- 107 658 689
- US-A1- 2005 124 221
- US-A1- 2006 187 521
- US-A1- 2008 165 496
- US-A1- 2012 105 931
- US-B1- 6 373 620

## Description

### TECHNICAL FIELD

The present disclosure relates to an optical system comprising an optical device mounted in a housing, and a method of cooling an optical device of an optical system.

### BACKGROUND

A large variety of optical devices for controlling light beams, in particular laser beams, has been developed in the past decades, among them are Pockels cells (PC). Pockels cell is a generic descriptor for an electro-optic modulator (EOM) device utilizing an electric field to induce a change in the polarization state of light transmitted through the device. While electro-optic effects have been known for over a century, devices based on electro-optics have been become increasingly important following the invention of the laser. Many versions of these devices have been invented and/or put into research and commercial service. However, high average power (HAP) and/or high peak power (HPP) along with high pulse repetition frequency (HPRF) challenge the available technology and materials. In particular, one big challenge in connection with HAP, HPP and HPRF is heating of the crystal and electrodes due to resistance heating and unwanted effects resulting therefrom. The present disclosure will address these key issues.

The document US 2006/187521 A1 discloses a Pockels cell comprising an optical device in the form of two spaced-apart RTP crystals and a housing comprising at least one inlet port and at least one outlet port, both inlet and outlet ports being formed in a wall of the housing, wherein the optical device is mounted within the housing, so that a fluid connection is provided between the at least one inlet port and the at least one outlet port to allow a cooling medium to flow along at least a portion of a side face of the optical device on the way from the inlet port to the outlet port.

### SUMMARY

A first aspect of the present disclosure is related to an optical system according to the features of claim 1.

A second aspect of the present disclosure is related to a method of cooling an optical device of an optical system according to the first aspect, comprising supplying a cooling medium to the inlet port during operation of the optical device.

### BRIEF DESCRIPTION OF THE DRAWINGS

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated as they become better understood by reference to the following detailed description.

The elements of the drawings are not necessarily to scale relative to each other. Like reference numerals designate corresponding similar parts.

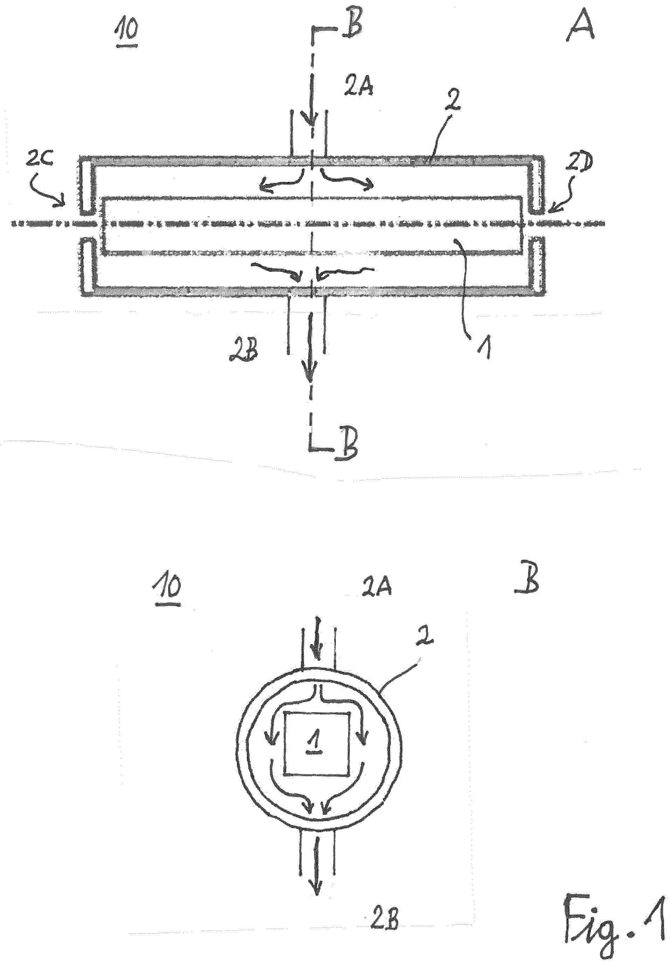

Fig. 1 shows an example of an optical system according to the first aspect in a longitudinal cross section (A) and a lateral cross section (B), the optical system comprising a housing with one inlet port and one oppositely located outlet port for a cooling medium.

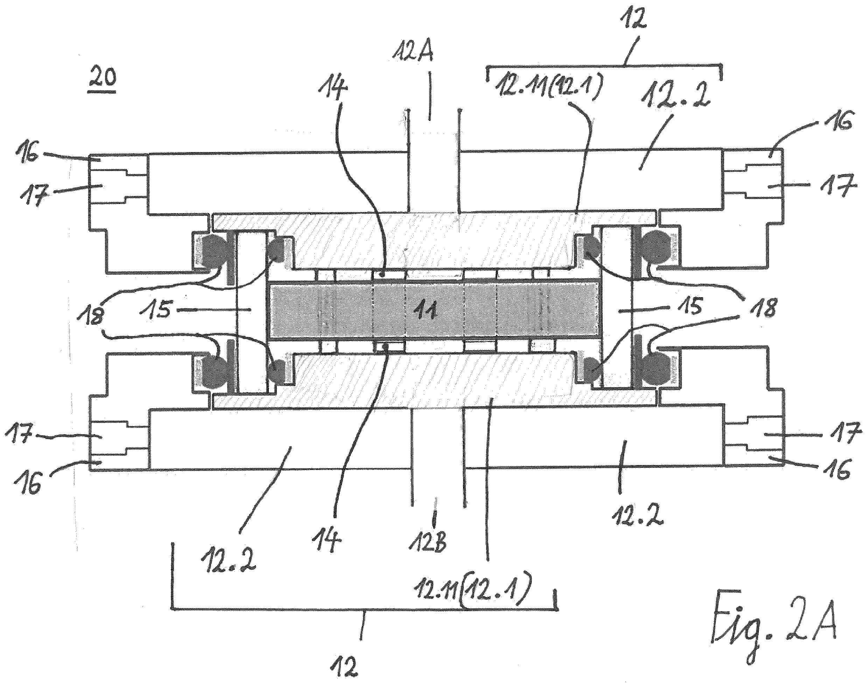

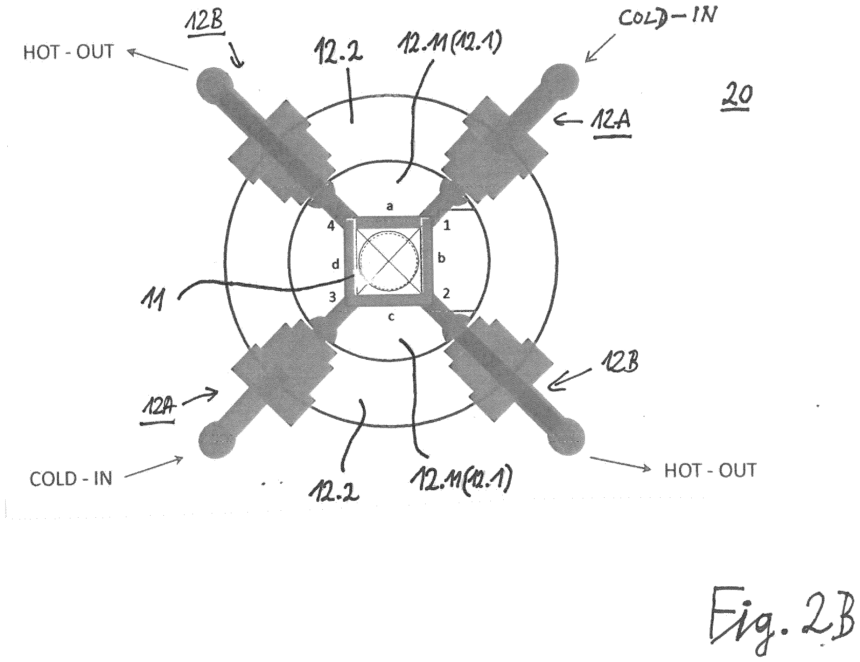

Fig. 2 comprises Figs. 2A and 2B and shows an example of an optical system according to the first aspect in a longitudinal cross section (A) and a lateral cross section (B), the optical system comprising a housing with two inlet openings are formed in a wall of the housing so that they are located directly opposite each other, and two outlet ports are formed in the wall of the housing so that they are as well located directly opposite each other.

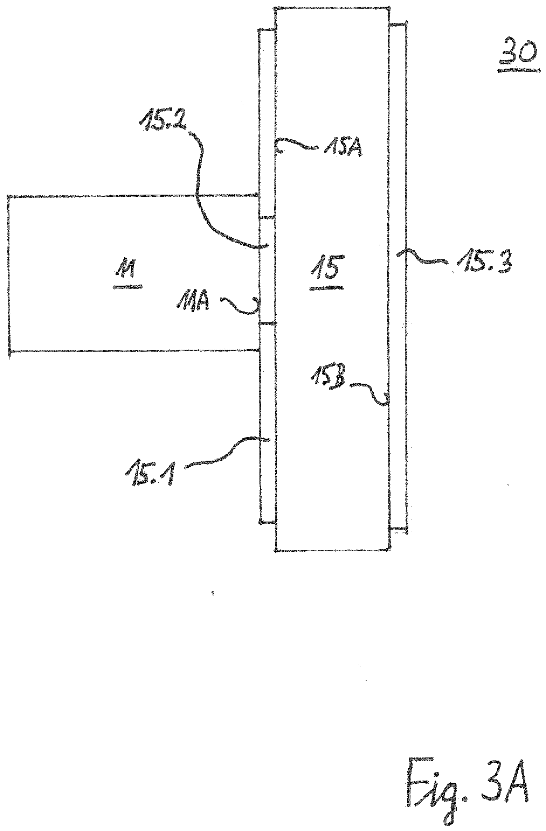

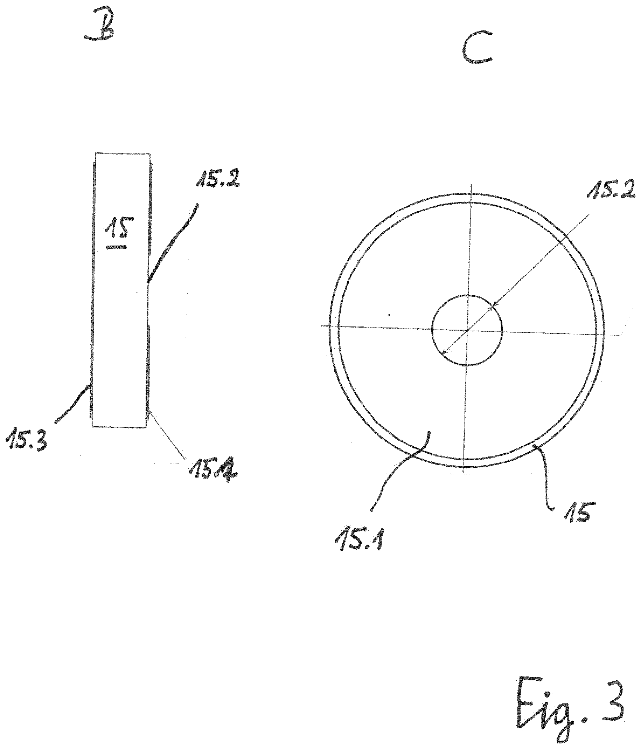

Fig. 3 comprises Fig. 3A to 3C and shows a longitudinal cross-sectional view of a right side end portion of the optical system of Fig. 2 including a right side output window (A), an enlarged cross-sectional side view of an input window (B), and a view of the window in a longitudinal direction (C) for illustrating the function of an etalon spacer coating.

### DESCRIPTION OF EMBODIMENTS

In the following detailed description, reference is made to the accompanying drawings, which form a part hereof, and in which is shown by way of illustration specific embodiments in which the invention may be practiced. In this regard, directional terminology, such as "top", "bottom", "front", "back", "leading", "trailing", etc., is used with reference to the orientation of the Figure(s) being described. Because components of embodiments can be positioned in a number of different orientations, the directional terminology is used for purposes of illustration and is in no way limiting. It is to be understood that other embodiments may be utilized and structural or logical changes may be made without departing from the scope of the present invention. The following detailed description, therefore, is not to be taken in a limiting sense, and the scope of the present invention is defined by the appended claims.

It is to be understood that the features of the various exemplary embodiments described herein may be combined with each other, unless specifically noted otherwise.

As employed in this specification, the terms "bonded", "attached", "connected", "coupled" and/or "electrically connected/electrically coupled" are not meant to mean that the elements or layers must directly be contacted together; intervening elements or layers may be provided between the "bonded", "attached", "connected", "coupled" and/or "electrically connected/electrically coupled" elements, respectively. However, in accordance with the disclosure, the above-mentioned terms may, optionally, also have the specific meaning that the elements or layers are directly contacted together, i.e. that no intervening elements or layers are provided between the "bonded", "attached", "connected", "coupled" and/or "electrically connected/electrically coupled" elements, respectively.

Further, the word "over" used with regard to a part, element or material layer formed or located "over" a surface may be used herein to mean that the part, element or material layer be located (e.g. placed, formed, deposited, etc.) "indirectly on" the implied surface with one or more additional parts, elements or layers being arranged between the implied surface and the part, element or material layer. However, the word "over" used with regard to a part, element or material layer formed or located "over" a surface may, optionally, also have the specific meaning that the part, element or material layer be located (e.g. placed, formed, deposited, etc.) "directly on", e.g. in direct contact with, the implied surface.

### DETAILED DESCRIPTION

Fig. 1 shows a first example of an optical system according to the first aspect. The optical system 10 of Fig. 1 comprises an optical device 1 and a housing 2 comprising one inlet port 2A and one outlet port 2B, both inlet and outlet ports 2A and 2B being formed in a wall of the housing 2 wherein the optical device 1 is mounted within the housing 2, so that a fluid connection is provided between the one inlet port 2A and the one outlet port 2B to allow a cooling medium to flow along at least a portion of a side face of the optical device 1 on the way from the inlet port 2A to the outlet port 2B.

According to an embodiment of the optical system 10 of Fig. 1, the optical device 1 comprises a Pockels cell, in particular a CdTe Pockels cell. As can be seen in Fig. 1A, the housing 2 further comprises a first light passage opening 2C and a second light passage opening 2D so that a laser light beam can pass through the crystal of the Pockels cell in a longitudinal direction.

According to an embodiment of the optical system 10 of Fig. 1, the housing 2 comprises the form of a longitudinal tube and the inlet and outlet ports 2A and 2B are arranged at one and the same longitudinal position of the tube, in particular at a center longitudinal position of the tube, as shown in Fig. 1A. Alternatively, it can also be the case that the inlet and outlet ports are arranged at different longitudinal positions of the tube, in particular at positions which are symmetric to the center longitudinal position of the tube.

According to an embodiment of the optical system 10 of Fig. 1, the inlet port 2A can be connected to a reservoir of a cooling medium which can be a gaseous medium, in particular air, nitrogen, or helium, or a high electrical resistance liquid medium like deionized water.

According to an embodiment of the optical system 10 of Fig. 1, in addition to or alternative to being connected to a cooling medium reservoir, the inlet and outlet ports 2A and 2B are connected to a closed loop cooling system.

According to an embodiment of the optical system 10 of Fig. 1, as shown in Fig. 1A, the one inlet port 2A is formed in the wall so that it is located directly opposite to the one outlet port 2B.

Fig. 2 comprises Figs. 2A and 2B and shows a second example of an optical system according to the first aspect in a longitudinal cross section (A) and a lateral cross section (B) .

The optical system 20 of Fig. 2 comprises an optical device 11 and a housing 12 comprising two inlet ports 12A and two outlet ports 12B being formed in the walls of the housing 12 wherein the optical device 11 is mounted within the housing 12, so that a fluid connection is provided between the inlet ports 12A and the outlet ports 12B to allow a cooling medium to flow along at least a portion of a side face of the optical device 11 on the way from the inlet ports 12A to the outlet ports 12B.

The optical system 20 of Fig. 2 may further be configured such that fluid connections are provided between each one of the two inlet ports 12A and each one of the two outlet ports 12B. The two inlet openings 12A may be formed in the wall so that they are located directly opposite each other, and equally the two outlet ports 12B may be formed in the wall so that they are located directly opposite each other. As a result, as can be seen in Fig. 2B, the inflow of the cooling medium occurs from both input ports 12A in opposite directions towards each other. And the outflow of the cooling medium occurs through both output ports 12B in opposite directions away from each other. As can further be seen in Fig. 2B, the cooling medium flowing in through the right upper input port 12A, flows along the surfaces a and b to the output ports 12B, and the cooling medium flowing in through the left lower input port 12A, flows along the surfaces c and d to the output ports 12B. In this way symmetric cooling can be achieved. Furthermore maximum distribution of the cooling medium along the faces a-d can be provided. Either the faces b and d or the faces a and c can be provided with metallic electrodes, in particular gold electrodes, for applying a voltage to the Pockels cell. The electroded surfaces are exposed and cooled to remove both absorbed laser energy and RF resistance and loss tangent heating in or at the electrode surface. Hence the (gold) electrodes are directly cooled by the flowing gas. In a microwave coupled design all four faces a to d could or should be electroded and the cooling would therefore be needed on all faces a to d.

The optical system 20 of Fig. 2 may further be configured such that the housing 12 comprises an inner portion 12.1 and an outer portion 12.2 wherein the outer portion 12.2 comprises the form of a tube comprising a ring-like cross-section. The inner portion 12.1 may further comprise one or more holding members 12.11 configured to hold the optical device 11. The optical device 11 may further comprise a cuboid shape comprising four side faces, and the holding members 12.11 may comprise 1, 2, 3 or 4 holding members 12.11, each one of the holding members 12.11 being connected between the outer portion 12.2 and one of the side faces of the optical device 11. The holding members 12.11 may each comprise an inner manifold structure which is in fluid connection with the inlet and outlet ports 12A and 12B.

Fig. 2A shows a view onto the optical system from the right side of Fig. 2B so that holding members 12.11 having surfaces a and c and the right upper input port 12A and the left lower output port 12B of Fig. 2B can be seen in Fig. 2A.

Each one of the holding members 12.11 can be connected to one of the side faces of the optical device 11 by a plurality of mounting pads 14 (see Fig. 2A), each one of the mounting pads 14 being applied between a portion of the surface of the optical device 11 so that the cooling medium flows along pad-free portions of the side face of the optical device 11. In particular, the mounting pads 14 may comprise a size which is smaller than a lateral cross-section of the optical device.

At both longitudinal ends of the optical device 11 windows 15 are disposed which can be made of, for example, ZnSe. ZnSe usually has a transmission of >99% at a wavelength of 10,6 µm. The windows 15 can be formed circular and they can be pressed against the optical device 11 by end caps 16 which are fixed by screws 17 to the outer portion 12.2 of the housing 12. There can be used, for example, 4 screws 17 which can be distributed over the circumference of a circle and screwed through the end caps 16 and into the wall of the outer section 12.2 of the housing 12 (see e.g. Fig. 2A). The end caps 16 can be made of Al, for example. The pressure force of the end caps 14 can be transferred to the windows 15 by 0-rings 18 which are inserted between the end caps 14 and the windows 15 and also between the windows 15 and the holding members 12.11. On the outside each one of the O-rings 18 can be positioned between an inner surface of an end cap 14 and an outer surface of a window 15 and on the inside each one of the O-rings 18 can be positioned between an inner surface of the window 15 and an outer surface of a holding member 12.11.

Fig. 3 comprises Fig. 3A to 3C and will be explained in further detail below. In particular, Fig. 3A shows the right end portion of the optical system in some greater detail. The optical device 11, in particular the Pockels cell, comprises a right end outer face 11A. Successful mounting the window 15 in contact with the crystal face 11A is achieved with a construction incorporating unequal compression compliance on the elastomeric mounting of the windows 15 to insure low strain mounting of the windows 15 while maintaining spacer coating 15.1 contact with the crystal 11. Additionally, the mounting forces are opposed to each other at the same radius, thus removing a source of window distortion. Without this construction the windows 15 would be pushed against the crystal 11 with no counterbalancing force and as the forces are "off" center, the windows are essentially "bent" over the end of the crystal 11. The construction as presented in this disclosure minimizes this effect.

According to an embodiment of the optical system 20 of Fig. 2, the inlet and outlet ports 12A and 12B are connected to a reservoir of a cooling medium which can be a gaseous medium, in particular air, nitrogen, or helium, or a high electrical resistance liquid medium like deionized water.

According to an embodiment of the optical system 20 of Fig. 2, in addition to or alternative to being connected to a cooling medium reservoir, the inlet and outlet ports 12A and 12B are connected to a closed loop cooling system.

The present disclosure also relates to a method according to the second aspect, namely a method of cooling an optical device of an optical system according to the first aspect. The method comprises supplying a cooling medium to the inlet port during operation of the optical device. The cooling medium can be a gaseous medium, in particular air, nitrogen, or helium, or a high electrical resistance liquid medium, in particular deionized water.

Fig. 3 comprises Fig. 3A to 3C and shows different views of an optical module according to the third aspect and of a window as being part of the optical module for illustrating the function of an etalon spacer coating.

The optical module 30 as shown in Fig. 3A comprises an optical device 11 comprising a light outlet face 11A and a window 15 comprising a light inlet face 15A disposed at one end of the optical device 11, wherein a width of a spacing 15.2 between the light outlet face 11A and the light inlet face 15A is adjustable so as to maximize a transmission of light from the optical device through the window. The same or similar setup can be provided on the left hand side of the optical device 11.

According to an embodiment of the module 30 of Fig. 3, the spacing is virtually empty or filled with any kind of gas as, for example, air, and in particular of atmospheric pressure.

According to an embodiment of the module 30 of Fig. 3, the window 15 may further comprises an antireflection layer 15.3 disposed on a light outlet face 15B of the window 15.

According to an embodiment of the module 30 of Fig. 3, the window 15 comprises a spacer layer 15.1 disposed on the light inlet face 15A, wherein the spacer layer 15.1 is not provided in the area of the spacing 15.2. Fig. 3B shows the window 15 in an inverse constellation to Fig. 3A with the spacer layer 15.1 on the right side and the antireflection layer 15.3 on the left side. Fig. 3C shows that the uncoated portion of the light inlet face 15A of the window 15 is circular so that also the resulting spacing is circular. The location and lateral diameter of the spacing 15.2 is such that a full width of a laser beam will pass through the spacing 15.2 and can be in a range from 5 to 15 mm, for example, whereas the diameter of the window can be in a range from 20 to 30 mm, for example.

It is obvious that the thickness of the spacer layer 15.1 determines the width of the spacing 15.2. If filled with air, the spacing 15.2 has the effect of an air spaced etalon. In particular, the spacing 15.2 is intended to replace an antireflection layer which can be used instead. More specifically, the width of the spacing 15.2 is adjusted to about half of the wavelength for which the optical system is intended to be used. As a result, optical waves will emerge from the light outlet face 11A of the optical device 11 and will interfere destructively with optical waves reflected by the light inlet face 15A of the window 15. As an example, in case of a wavelength of 10.6 µm of a CO2 laser, the thickness of the spacer layer 15.1 and the width of the spacing 15.2 can be adjusted to 5.3 µm +/- 0.15 µm. It should be mentioned at this point that any tolerance can be determined by specification and may be larger or smaller than +/- 0.15 µm.

As mentioned above, the spacer 15.1 is not present in the central region of the window 15 and this "opening" is dimensioned to be slightly smaller than the crystal face. When the window 15 is mounted by compression mounts against the crystal, the crystal face is held one half wavelength of light away from the window face. This creates an etalon with maximum transmission. Since the surface of the crystal is not effected by a coating, the surface LIDT (laser induced damage threshold) is improved over an antireflection coated crystal surface. The window surfaces bare and coated typically have higher LIDT than the crystal. Thus this etalon structure has both high transmission and high LIDT. The thin spacer layer and window move with the crystal as it expands/contracts with temperature changes, thus maintaining the appropriate spacer thickness. Also to first order, the spacer coating blocks/impedes contamination of the crystal and/or window surface. The spacer coating also acts as a barrier to arc over.

According to an embodiment of the optical module 30 of Fig. 3, the optical device 11 comprises a Pockels cell, in particular a CdTe Pockels cell.

According to an embodiment of the optical module 30 of Fig. 3, the window 15 is made of ZnSe. Reference is made to the explanations above.

It should further be mentioned that the optical module 30 of Fig. 3A or of the third aspect can be part of the optical system according to the first aspect, in particular part of one of the embodiments of optical systems 10 or 20 as were described in connection with Figs. 1 or 2. The left hand light inlet portion can be structured and assembled in the same or similar way as shown in Fig. 3 for the light outlet portion.

## Claims

1. An optical system (10; 20), comprising
an optical device (1; 11) comprising a Pockels cell, in particular a CdTe Pockels cell; and
a housing (2; 12) comprising at least one inlet port (2A; 12A) and at least one outlet port (2B; 12B), both inlet and outlet ports (2A, 2B; 12A, 12B) being formed in a wall of the housing (2; 12); wherein
the optical device (1; 11) is mounted within the housing (2; 12), so that a fluid connection is provided between the at least one inlet port (2A; 12A) and the at least one outlet port (2B; 12B) to allow a cooling medium to flow along at least a portion of a side face of the optical device (1; 11) on the way from the inlet port (2A; 12A) to the outlet port (2B; 12B), wherein
the housing (12) comprises an inner portion (12.1) and an outer portion (12.2) wherein the outer portion (12.2) comprises the form of a tube comprising a ring-like cross-section, wherein the inner portion (12.1) comprises one or more holding members (12.11) configured to hold the optical device (11),
**characterized in that**
the one or more holding members (12.11) each comprise an inner manifold structure which is in fluid connection with the inlet and outlet ports (12A, 12B).

2. The optical system (20) according to claim 1, wherein
the housing (12) comprises two inlet ports (12A) and two outlet ports (12B) being formed in the walls of the housing (12) so that fluid connections are provided between each one of the two inlet ports (12A) and each one of the two outlet ports (12B).

3. The optical system (20) according to claim 1, wherein the inlet and outlet ports (12A, 12B) are arranged at one and the same longitudinal position of the tube and in regular spacings along a circumference of the tube.

4. The optical system (20) according to any one of claims 2 or 3, wherein
the two inlet ports (12A) are formed in the wall so that they are located directly opposite each other, and
the two outlet ports (12B) are formed in the wall so that they are located directly opposite each other.

5. The optical system (20) according to claim 1, wherein
the optical device (11) comprises a cuboid shape comprising four side faces, and
and one or more holding members (12.11) comprises 1, 2, 3, or 4 holding members (12.11), each one of the holding members (12.11) being connected between the outer portion (12.2) and one of the side faces of the optical device (11).

6. The optical system (20) according to claim 1, wherein
each one of the holding members (12.11) is connected to one of the side faces of the optical device (11) by a plurality of mounting pads (14), each one of the mounting pads (14) being applied between a portion of the surface of the optical device (11) so that the cooling medium flows along pad-free portions of the side face of the optical device (11).

7. The optical system (20) according claim 6, wherein
the mounting pads (14) comprise a size which is smaller than a lateral cross-section of the optical device (11).

8. The optical system (20) according to any one of the preceding claims, wherein
the inlet and outlet ports (2A, 2B; 12A, 12B) are connected to a closed loop cooling system.

9. A method of cooling an optical device of an optical system according to any one of the preceding claims, comprising
supplying a cooling medium to the inlet port (2A; 12A) during operation of the optical device (1; 11).

10. The method according to claim 9, wherein
the cooling medium is a gaseous medium, in particular air, nitrogen, or helium.

11. The method according to claim 9, wherein
the cooling medium is a high electrical resistance liquid medium, in particular deionized water.

## Patentansprüche

1. Ein optisches System (10; 20), umfassend
eine optische Vorrichtung (1; 11) mit einer Pockels-Zelle, insbesondere einer CdTe-Pockels-Zelle; und
ein Gehäuse (2; 12) mit mindestens einer Einlassöffnung (2A; 12A) und mindestens einer Auslassöffnung (2B; 12B), wobei sowohl die Einlass- als auch die Auslassöffnung (2A, 2B; 12A, 12B) in einer Wand des Gehäuses (2; 12) ausgebildet sind; wobei
die optische Vorrichtung (1; 11) innerhalb des Gehäuses (2; 12) montiert ist, so dass eine Fluidverbindung zwischen der mindestens einen Einlassöffnung (2A; 12A) und der mindestens einen Auslassöffnung (2B; 12B) vorgesehen ist, um zu ermöglichen, dass ein Kühlmedium entlang mindestens eines Teils einer Seitenfläche der optischen Vorrichtung (1; 11) auf dem Weg von der Einlassöffnung (2A; 12A) zu der Auslassöffnung (2B; 12B) fließt, wobei
das Gehäuse (12) einen inneren Abschnitt (12.1) und einen äußeren Abschnitt (12.2) umfasst, wobei der äußere Abschnitt (12.2) die Form einer Röhre mit einem ringförmigen Querschnitt aufweist, wobei der innere Abschnitt (12.1) ein oder mehrere Halteelemente (12.11) umfasst, die so konfiguriert sind, dass sie die optische Vorrichtung (11) halten,
**dadurch gekennzeichnet**, das s das eine oder die mehreren Halteelemente (12.11) jeweils eine innere Verteilerstruktur aufweisen, die in Fluidverbindung mit den Einlass- und Auslassöffnungen (12A, 12B) steht.

2. Optisches System (20) nach Anspruch 1, wobei
das Gehäuse (12) zwei Einlassöffnungen (12A) und zwei Auslassöffnungen (12B) umfasst, die in den Wänden des Gehäuses (12) ausgebildet sind, so dass Fluidverbindungen zwischen jeder der beiden Einlassöffnungen (12A) und jeder der beiden Auslassöffnungen (12B) vorhanden sind.

3. Optisches System (20) nach Anspruch 1, wobei
die Einlass- und Auslassöffnungen (12A, 12B) an ein und derselben Längsposition des Rohrs und in regelmäßigen Abständen entlang eines Umfangs des Rohrs angeordnet sind.

4. Das optische System (20) nach einem der Ansprüche 2 oder 3, wobei
die beiden Einlassöffnungen (12A) in der Wand so ausgebildet sind, dass sie einander direkt gegenüberliegen, und
die beiden Auslassöffnungen (12B) so in der Wand ausgebildet sind, dass sie sich direkt gegenüberliegen.

5. Optisches System (20) nach Anspruch 1, wobei
die optische Vorrichtung (11) eine Quaderform mit vier Seitenflächen aufweist und
und ein oder mehrere Halteelemente (12.11) 1, 2, 3 oder 4 Halteelemente (12.11) umfassen, wobei jedes der Halteelemente (12.11) zwischen dem äußeren Abschnitt (12.2) und einer der Seitenflächen der optischen Vorrichtung (11) verbunden ist.

6. Optisches System (20) nach Anspruch 1, wobei
jedes der Halteelemente (12.11) mit einer der Seitenflächen der optischen Vorrichtung (11) durch eine Vielzahl von Montagepads (14) verbunden ist, wobei jedes der Montagepads (14) zwischen einem Abschnitt der Oberfläche der optischen Vorrichtung (11) angebracht ist, so dass das Kühlmedium entlang padfreier Abschnitte der Seitenfläche der optischen Vorrichtung (11) fließt.

7. Optisches System (20) nach Anspruch 6, wobei
die Montagepads (14) eine Größe aufweisen, die kleiner ist als ein seitlicher Querschnitt der optischen Vorrichtung (11) .

8. Optisches System (20) nach einem der vorhergehenden Ansprüche, wobei
die Einlass- und Auslassöffnungen (2A, 2B; 12A, 12B) an ein Kühlsystem mit geschlossenem Kreislauf angeschlossen sind.

9. Verfahren zum Kühlen einer optischen Vorrichtung eines optischen Systems nach einem der vorangehenden Ansprüche, umfassend
Zuführen eines Kühlmediums zu der Einlassöffnung (2A; 12A) während des Betriebs der optischen Vorrichtung (1; 11).

10. Verfahren nach Anspruch 9, wobei
das Kühlmedium ein gasförmiges Medium ist, insbesondere Luft, Stickstoff oder Helium.

11. Verfahren nach Anspruch 9, wobei
das Kühlmedium ein flüssiges Medium mit hohem elektrischen Widerstand ist, insbesondere deionisiertes Wasser.

## Revendications

1. Système optique (10 ; 20) comprenant
un dispositif optique (1 ; 11) comprenant une cellule de Pockels, en particulier une cellule de Pockels CdTe ; et
un boîtier (2 ; 12) comprenant au moins un orifice d'entrée (2A ; 12A) et au moins un orifice de sortie (2B ; 12B), les deux orifices d'entrée et de sortie (2A, 2B ; 12A, 12B) étant formés dans une paroi du boîtier (2 ; 12) ; dans lequel le dispositif optique (1 ; 11) est monté à l'intérieur du boîtier (2 ; 12), de sorte qu'une connexion fluidique est prévue entre l'au moins un port d'entrée (2A ; 12A) et l'au moins un port de sortie (2B ; 12B) pour permettre à un fluide de refroidissement de circuler le long d'au moins une partie d'une face latérale du dispositif optique (1 ; 11) sur le chemin du port d'entrée (2A ; 12A) au port de sortie (2B ; 12B), dans lequel
le boîtier (12) comprend une partie intérieure (12.1) et une partie extérieure (12.2) dans laquelle la partie extérieure (12.2) a la forme d'un tube ayant une section transversale en forme d'anneau, la partie intérieure (12.1) comprenant un ou plusieurs éléments de maintien (12.11) configurés pour maintenir le dispositif optique (11),
**caractérisé en ce que**
le ou les éléments de maintien (12.11) comprennent chacun une structure de collecteur interne qui est en connexion fluidique avec les ports d'entrée et de sortie (12A, 12B).

2. Système optique (20) selon la revendication 1, dans lequel
le boîtier (12) comprend deux orifices d'entrée (12A) et deux orifices de sortie (12B) formés dans les parois du boîtier (12) de sorte que des connexions fluidiques sont assurées entre chacun des deux orifices d'entrée (12A) et chacun des deux orifices de sortie (12B).

3. Système optique (20) selon la revendication 1, dans lequel
les orifices d'entrée et de sortie (12A, 12B) sont disposés à une seule et même position longitudinale du tube et à intervalles réguliers le long d'une circonférence du tube.

4. Système optique (20) selon l'une quelconque des revendications 2 ou 3, dans lequel
les deux orifices d'entrée (12A) sont formés dans la paroi de manière à être directement opposés l'un à l'autre, et
les deux orifices de sortie (12B) sont formés dans la paroi de manière à être directement opposés l'un à l'autre.

5. Système optique (20) selon la revendication 1, dans lequel
le dispositif optique (11) a une forme cubique composée de quatre faces latérales, et
et un ou plusieurs éléments de maintien (12.11) comprend 1, 2, 3, ou 4 éléments de maintien (12.11), chacun des éléments de maintien (12.11) étant relié entre la partie extérieure (12.2) et l'une des faces latérales du dispositif optique (11) .

6. Système optique (20) selon la revendication 1, dans lequel
chacun des éléments de maintien (12.11) est relié à l'une des faces latérales du dispositif optique (11) par une pluralité de patins de montage (14), chacun des patins de montage (14) étant appliqué entre une partie de la surface du dispositif optique (11) de sorte que le fluide de refroidissement s'écoule le long des parties sans patin de la face latérale du dispositif optique (11).

7. Système optique (20) selon la revendication 6, dans lequel
les patins de montage (14) ont une taille inférieure à la section transversale latérale du dispositif optique (11).

8. Système optique (20) selon l'une quelconque des revendications précédentes, dans lequel
les ports d'entrée et de sortie (2A, 2B ; 12A, 12B) sont reliés à un système de refroidissement en boucle fermée.

9. Procédé de refroidissement d'un dispositif optique d'un système optique selon l'une quelconque des revendications précédentes, comprenant
fournir un fluide de refroidissement à l'orifice d'entrée (2A ; 12A) pendant le fonctionnement du dispositif optique (1 ; 11) .

10. Procédé selon la revendication 9, dans lequel
le milieu de refroidissement est un milieu gazeux, en particulier de l'air, de l'azote ou de l'hélium.

11. Procédé selon la revendication 9, dans lequel
le milieu de refroidissement est un milieu liquide à haute résistance électrique, en particulier de l'eau déionisée.
